# EUROPEAN PATENT APPLICATION

(11) **EP 4 454 864 A1**
(43) Date of publication of application: **30.10.2024**
(21) Application number: 24171099.5
(22) Date of filing: 18.04.2024
(51) Int. Cl.: B29C 65/02, B65B 51/14, B65B 51/30, B29C 65/08, B29C 65/36

(54) **PACKAGE FORMING APPARATUS FOR A PACKAGING MACHINE AND PACKAGING MACHINE FOR FORMING PACKAGES FILLED WITH A POURABLE PRODUCT**

(30) Priority: 26.04.2023 IT 202300008181
(71) Applicant: Tetra Laval Holdings & Finance S.A., 1009 Pully (CH)
(72) Inventor: ANDREOTTI, Stefano, 41123 Modena (IT); DE PIETRI TONELLI, Roberto, 41123 Modena (IT); ORSINI, Ivan, 41123 Modena (IT); POPPI, Marco, 41123 Modena (IT); GIAMPIERI, Andrea, 41123 Modena (IT); RIMONDI, Fabrizio, 41123 Modena (IT); VIOLANTE, Antonio, 41123 Modena (IT)
(74) Representative: Tetra Pak - Patent Attorneys SE

(57) **Abstract**

There is described a package forming apparatus (10, 10', 10") comprising an operative device (25) having a first operative group (26) and a second operative group (27). The operative device (25) comprises at least one support group (30) and the respective first operative group (26) and the respective second operative group (27) are movably connected to the support group (30). Each support group (30) comprises a linear guide system (31). The first operative group (26) and/or the second operative group (27) are linearly movably connected to the linear guide system (31) and such that the respective operative device (25) is controllable between a rest configuration and an active configuration by linearly moving the respective first operative group (26) and/or the respective second operative group (27).

## Description

### TECHNICAL FIELD

The present invention relates to a package forming apparatus for a packaging machine for forming packages filled with a pourable product, preferentially a pourable food product.

Advantageously, the present invention also relates to a packaging machine for forming packages filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

The package forming apparatus comprises at least one operative device, typically at least two operative devices, each having at least a first operative group and a second operative group configured to at least partially form and to transversally seal and cut in cooperation the, in use, advancing tube.

Moreover, each operative device comprises a support group movably coupled to a first guide and a second guide and cyclically moving up and down, in use, along the first guide and the second guide, thereby also inducing a respective movement of the respective first operative group and the respective second operative group.

Moreover, each first operative group and the respective second operative group comprise a respective support portion, a respective connection bar laterally extending from the respective support portion and a respective active portion connected to the respective connection bar and being configured to interact with the tube. Each support portion is angularly movable about a respective rotation axis so as to move each active portion between a respective first end position in which the respective active portion is configured to be detached from the tube and a respective second end position in which the respective active portion is configured to engage and manipulate the tube.

Even though the known package forming apparatuses and/or packaging machines work satisfactorily well, a desire is felt in the sector to further improve the known package forming apparatuses and/or the known packaging machines.

### DISCLOSURE OF INVENTION

It is therefore an object of the present invention to provide an improved package forming apparatus.

Additionally, it is an object of the present invention to provide an improved packaging machine.

According to the present invention, there is provided a package forming apparatus as claimed in claim 1.

Preferred non-limiting embodiments of the package forming apparatus are claimed in the claims being directly and indirectly dependent on claim 1.

According to the present invention, there is also provided a packaging machine according to claim 16.

### BRIEF DESCRIPTION OF THE DRAWINGS

Three non-limiting embodiments of the present invention will be described by way of example with reference to the accompanying drawings, in which:
Figure 1 is a schematic view of a packaging machine having a package forming apparatus according to a first embodiment of the present invention, with parts removed for clarity;
Figure 2 is a schematic perspective view of a detail of the package forming apparatus of Figure 1, with parts removed for clarity;
Figure 3 is a perspective view of a detail of the package forming apparatus of Figure 1, with parts removed for clarity;
Figure 4 is a perspective view of a further detail of the package forming apparatus of Figure 1, with parts removed for clarity;
Figures 5 and 6 are enlarged perspective views of a portion of the package forming apparatus of Figure 1 from different views, with parts removed for clarity;
Figure 7 shows the perspective view of Figure 6 with further parts removed;
Figures 8 to 11 are further perspective views of other details of the package forming apparatus of Figure 1, with parts removed for clarity;
Figures 12a and 12b are lateral views of a further detail of the package forming apparatus of Figure 1, with parts removed for clarity;
Figures 13 to 16 are perspective views of details of a package forming apparatus according to a second embodiment of the present invention, with parts removed for clarity; and
Figures 17 to 19 are perspective views of details of a package forming apparatus according to a third embodiment of the present invention, with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar, etc.

In more detail, packaging machine 1 may be configured to produce packages 2 from a multilayer packaging material; preferentially, the multilayer packaging material may have heat-seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Furthermore, packaging machine 1 may be configured to produce packages 2 by forming a tube 4 from web 3, longitudinally sealing tube 4, filling tube 4 with the pourable product and by transversally sealing, and preferentially transversally cutting tube 4.

Preferentially, tube 4 may extend along a central axis A.

According to some possible non-limiting embodiments, each package 2 may extend along a longitudinal axis B.

According to some possible embodiments, each package 2 may comprise at least a first transversal sealing band 5, and preferentially also a second transversal sealing band arranged at opposite ends of package 2.

Preferentially, each first transversal sealing band 5 may be substantially spaced apart from the respective second transversal sealing band along the respective longitudinal axis B.

Preferentially, each first transversal sealing band 5 may define a top transversal sealing band and each second transversal sealing band may define a bottom transversal sealing band.

Moreover, each package 2 may also comprise a longitudinal seam portion 6. Preferentially, each first transversal sealing band 5 and/or each second transversal sealing band may be transversal, preferentially perpendicular, to the respective longitudinal seam portion 6.

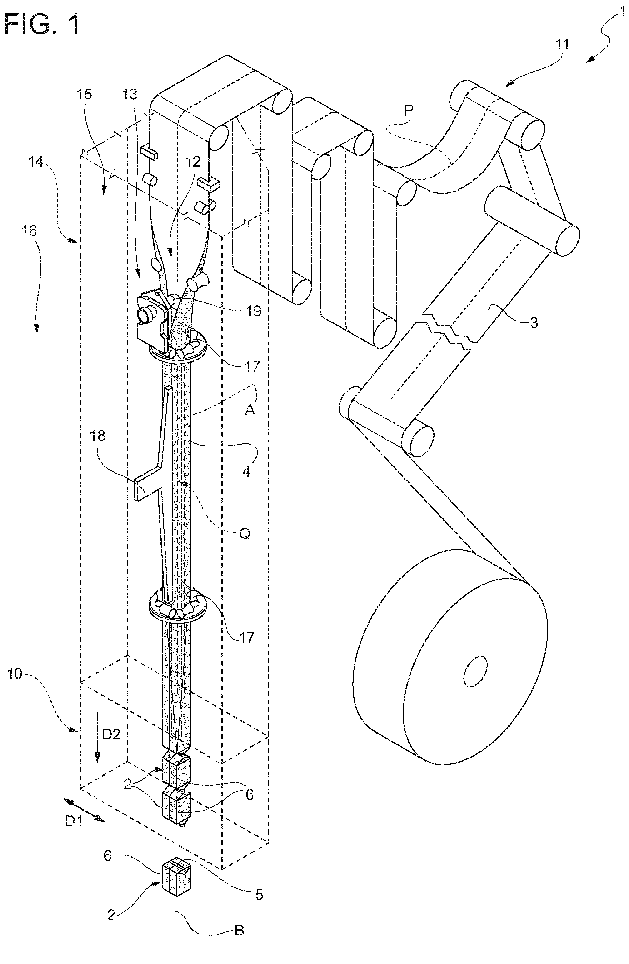

With particular reference to Figure 1, packaging machine 1 may comprise a package forming apparatus 10 configured to manipulate, preferentially to transversally seal and/or to transversally cut and/or to at least partially form, tube 4 for obtaining packages 2.

Preferentially, package forming apparatus 10 may comprise an advancement space within which, in use, tube 4 advances.

Moreover, packaging machine 1 may also comprise:
- a conveying device 11 configured to advance web 3 along a web advancement path P, preferentially to a tube forming station, at which, in use, web 3 is formed into tube 4, and configured to advance tube 4 along a tube advancement path Q;
- a tube forming and sealing device 12 configured to form tube 4 from the, in use, advancing web 3 and to longitudinally seal tube 4; and
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and being configured to fold and longitudinally seal tube 4 within isolation chamber 14, in particular inner environment 15.

Moreover, packaging machine 1 may also comprise a sterilization unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along tube advancement path Q, preferentially from tube forming and sealing device 12 to and/or at least partially within package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 may have a vertical orientation.

More specifically, tube forming and sealing device 12 may comprise at least two forming ring assemblies 17, preferentially arranged within isolation chamber 14, even more preferentially arranged within inner environment 15, being configured to gradually fold in cooperation with one another web 3 into tube 4, preferentially by overlapping the edges of web 3 with one another. Thereby, in use, seam portion 6 of tube 4 may be formed.

Additionally, tube forming and sealing device 12 may comprise a sealing head 18, preferentially arranged within isolation chamber 14, even more preferentially within inner environment 15, and configured to longitudinally seal tube 4, preferentially along longitudinal seam portion 6.

Moreover, tube forming and sealing device 12 may also comprise a pressure assembly configured to exert a mechanical force on longitudinal seam portion 6 to ensure sealing of tube 4 along longitudinal seam portion 6.

Preferentially, filling device 13 may comprise a filling pipe 19 being configured to direct, in use, the pourable product into tube 4. Preferentially, filling pipe 19 may, in use, be at least partially placed within tube 4 for feeding, in use, the pourable product into tube 4.

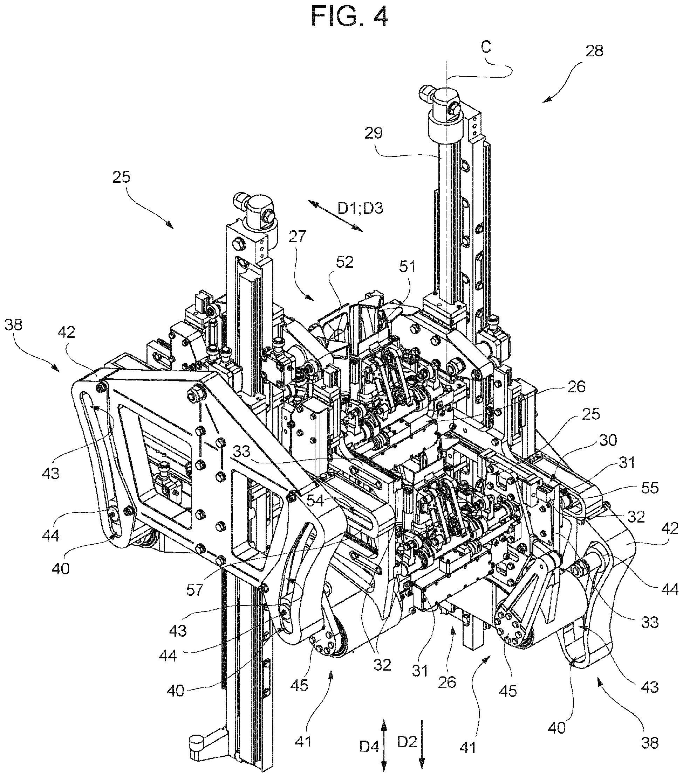

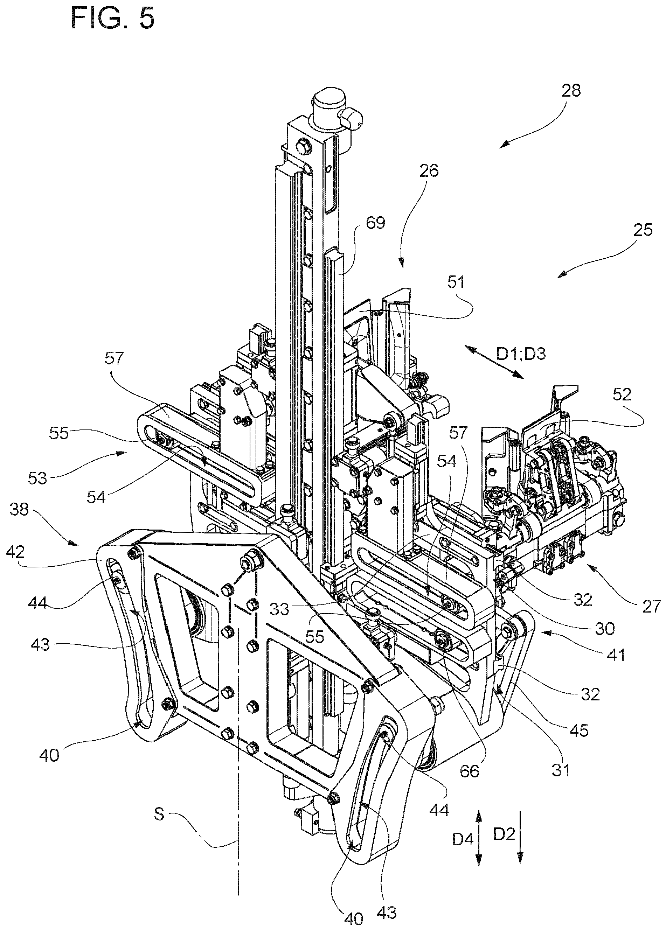

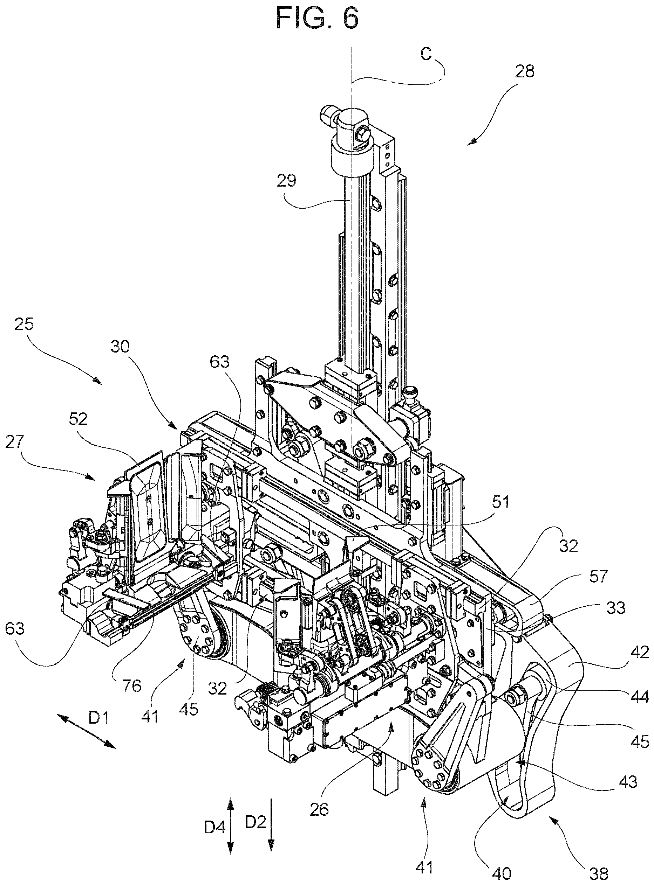

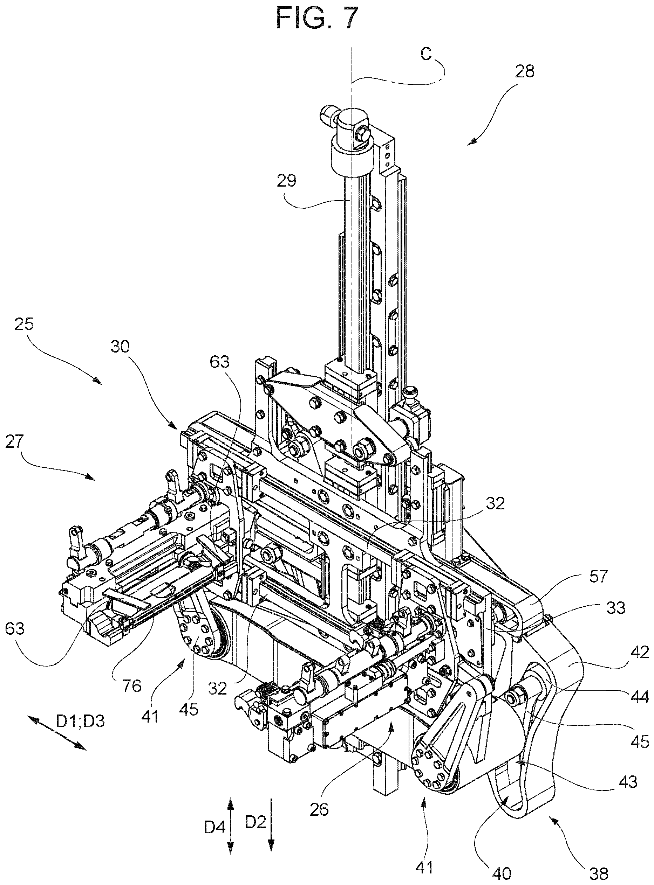

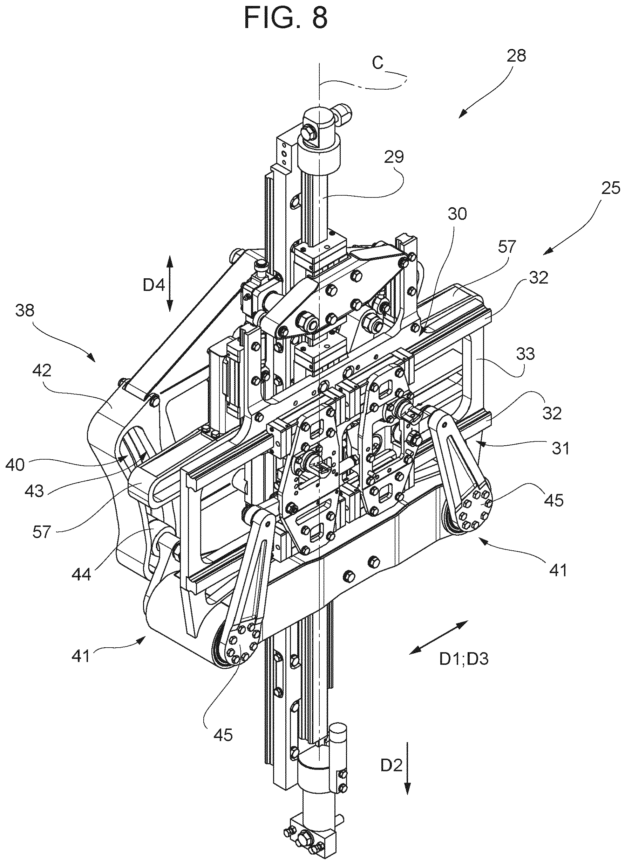

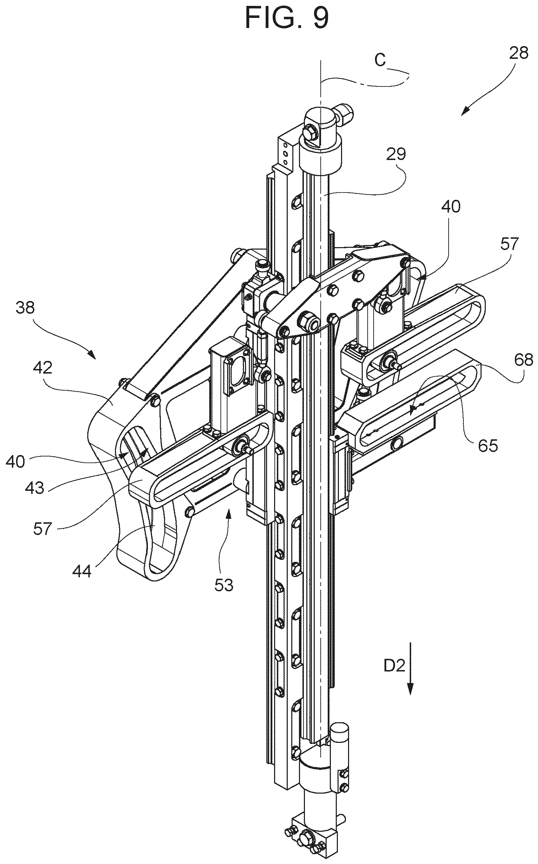

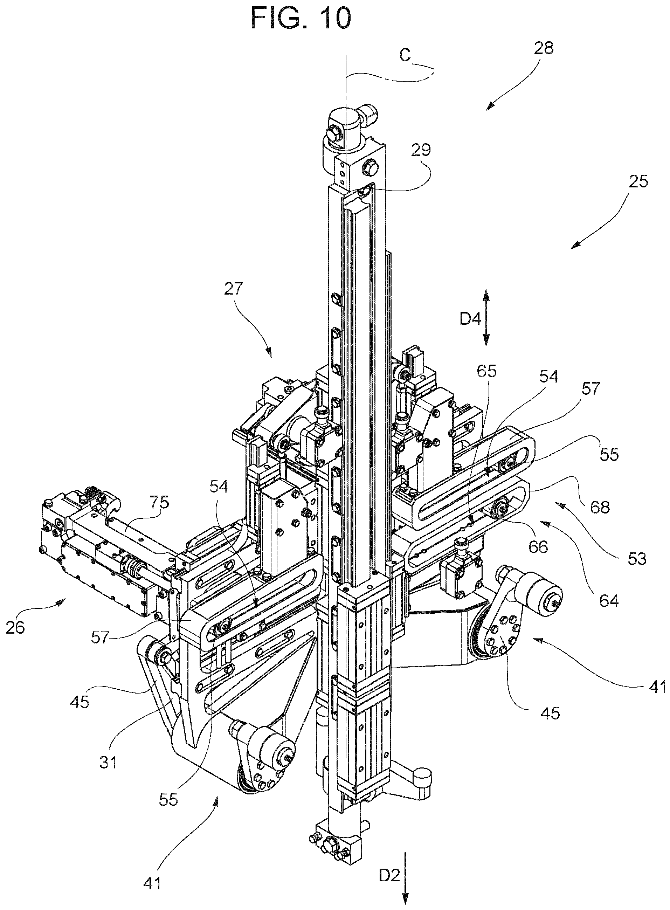

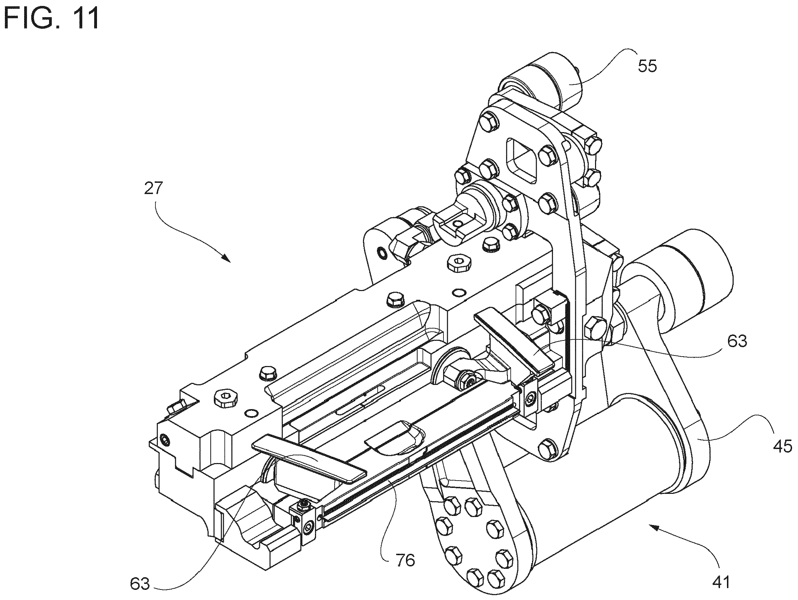

With particular reference to Figures 1 to 11, package forming apparatus 10 may comprise one or more, preferentially a plurality of, operative devices 25, each one configured to manipulate, preferentially to at least transversally seal and/or transversally cut tube 4 and/or to form (shape), the, in use, advancing tube 4.

Preferentially, package forming apparatus 10 may be configured to control each operative device 25 such to transversally seal and transversally cut tube 4 along equally spaced transversal cross sections, preferentially thereby forming the respective first transversal sealing bands 5 and/or the respective second transversal sealing bands.

According to some possible non-limiting embodiments, package forming apparatus 10 may comprise at least two operative devices 25, preferentially exactly two.

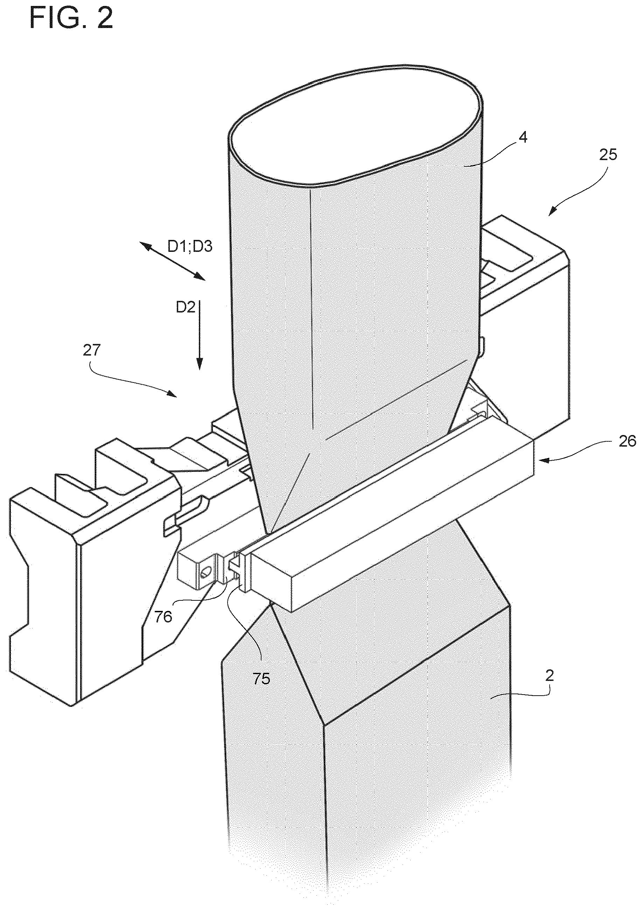

In further detail and with particular reference to Figures 2 to 11, each operative device 25 may comprise at least a first operative group 26 and a second operative group 27 configured to cooperate with one another so as to manipulate tube 4, preferentially so as to transversally seal and/or transversally cut and/or to at least partially form, tube 4.

In particular, each first operative group 26 and the respective second operative group 27 may be movable with respect to one another, preferentially so as to move each first operative group 26 and the respective second operative group 27 towards and away from one another.

In more detail, each operative device 25 may be controllable between an active configuration, in which the respective first operative group 26 and the respective second operative group 27 are moved towards one another for manipulating, preferentially transversally sealing and/or transversally cutting and/or for at least partially forming, tube 4 and a rest configuration, in which the respective first operative group 26 and the respective second operative group 27 are withdrawn from one another.

Each operative device 25, preferentially the respective first operative group 26 and the respective second operative group 27, may compress, preferentially squeeze and flat-lay, tube 4 along a respective cross-section, preferentially to also transversally seal and/or transversally cut tube 4 along the respective cross-section.

More specifically, each first operative group 26 and/or the respective second operative group 27 may be positioned in a respective first position and a respective second position, different from the respective first position, with the respective operative device 25 being controlled, respectively, in the respective active configuration and the respective rest configuration.

Preferentially, in use, each first operative group 26 and/or each second operative group 27 cyclically moves between the respective first position and the respective second position so as to cyclically control the respective operative device 25 between the respective active configuration and the respective rest configuration.

As will be explained in further detail further below, each first operative group 26 and/or the respective second operative group 27 may be linearly movable along a respective direction D1, preferentially back and forth, so as to move between the first position and the second position.

Moreover, each operative device 25 may be configured such that control between the respective active configuration and the respective rest configuration occurs by linearly moving the respective first operative group 26 and/or the respective second operative group 27 along direction D1.

Preferentially, the linear movement of each first operative group 26 and the linear movement of the respective second operative group 27 may be independent and/or different from one another. Each first operative group 26 may linearly move with a different motion profile and/or at a different speed and/or at a different distance and/or during a different time compared to the respective second operative group 27.

In further detail, each first operative group 26 and the respective second operative group 27 may both be linearly movable between the respective first position and the respective second position so as to control the respective operative device 25 between the respective active configuration and the respective rest configuration.

Moreover, direction D1 is transversal, preferentially perpendicular, to central axis A.

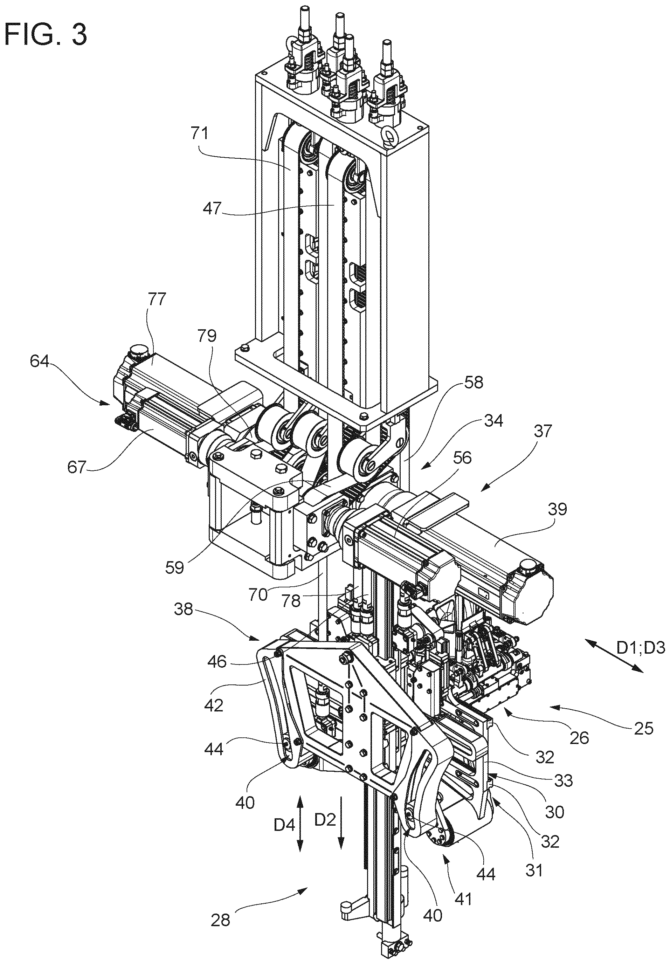

With particular reference to Figures 3 to 10, package forming apparatus 10 may comprise a support structure 28 movably carrying operative devices 25.

According to some possible embodiments, support structure 28 may comprise one or more support columns 29, each one movably carrying at least one, preferentially exactly one, respective operative device 25.

According to some non-limiting embodiments, package forming apparatus 10 may comprise at least two, preferentially exactly two, operative devices 25, and support structure 28 may comprise at least two, preferentially exactly two, support columns 29.

Preferentially, each support column 29 may extend along a respective longitudinal axis C, more preferentially defining a respective longitudinal extension of support structure 28. Each longitudinal axis C may have a (substantially) vertical orientation.

With particular reference to Figures 3 to 10, each operative device 25 may comprise a respective support group 30 movably carrying the respective first operative group 26 and the respective second operative group 27.

Preferentially, each support group 30 may be movably coupled to one respective support structure 28, preferentially to one respective support column 29, and preferably may be movable along the respective support column 29.

Preferentially but not necessarily, package forming apparatus 10 may also comprise a conveying unit 34 configured to advance each first operative group 26 and each second operative group 27 along a respective first advancement path and a respective second advancement path, respectively.

Preferentially, conveying unit 34 may be connected to each support group 30 and may move support group 30 along a respective path, preferentially back and forth along the respective support column 29, so as to actuate a movement of the respective first operative groups 26 and the respective second operative groups 27 along respectively the respective first advancement path and the respective second advancement path.

More preferentially, conveying unit 34 may be configured to move support groups 30 along a respective advancement direction D2, in particular during control of the respective operative device 25 from the respective rest configuration to the respective active configuration. In particular, advancement direction D2 is parallel to a direction of advancement of tube 4.

Preferentially, direction D1 is transversal, preferentially perpendicular, to advancement direction D2.

In more detail, each first advancement path and each second advancement path may comprise an operative portion along which each first operative group 26 and the respective second operative group 27 advance, in use, in a direction of advancement of tube 4, and a return portion along which each first operative group 26 and each second operative group 27 advance, in use, in a direction opposite to the direction of advancement of tube 4 so as to bring each first operative group 26 and each second operative group 27 back to the respective operative portion. According to the specific embodiment disclosed, each operative portion and the respective return portion are substantially coincident, the respective first operative group 26 and the respective second operative group 27 moving in opposite directions when advancing, in use, along the respective operation portion and the respective return portion.

Moreover, each operative device 25 may be controlled from the respective rest configuration to the respective active configuration during advancement of the respective first operative group 26 and the respective second operative group 27 along the respective operative portion, preferentially to transversally seal, to transversally cut and to at least partially form tube 4.

In particular, when the respective first operative group 26 and the respective second operative group 27 of a first operative device 25 are spaced apart from one another (i.e. the first operative device 25 being in the rest configuration) a first passage is defined between the respective first operative group 26 and the respective second operative group 27 of the first operative device 25. In this way, the respective first operative group 26 and the respective second operative group 27 of a second operative device 25, which are arranged close to each other (i.e. the second operative device 25 being in the active configuration), can pass through the first passage. In a similar way, when the respective first operative group 26 and the respective second operative group 27 of the second operative device 25 are spaced apart from one another (i.e. the second operative device 25 being in the rest configuration) a second passage is defined between the respective first operative group 25 and the respective second operative group 27 of the respective second operative device 25. In this way, the respective first operative group 26 and the respective second operative group 27 of the respective first operative device 25, which are arranged close to each other (i.e. the first operative device 25 being in the active configuration), can pass through the second passage.

With particular reference to Figures 3 to 10, each support group 30 comprises a linear guide system 31 movably carrying the respective first operative group 26 and the respective second operative group 27.

Each linear guide system 31 is configured such that the respective operative device 25 is controllable between the respective rest configuration and the respective active configuration by linearly moving the respective first operative group 26 and/or the respective second operative group 27, preferentially between the respective first position and the respective second position.

In more detail, each first operative group 26 and/or the respective second operative group 27 is/are linearly movably connected to the respective linear guide system 31 such that the respective operative device 25 is controllable between the rest configuration and the respective active configuration.

In particular, each linear guide system 31 allows to move the respective first operative group 26 and/or the respective second operative group 27 along direction D1.

Preferentially, linear guide system 31 may comprise at least one, preferentially at least two, (rectilinear) guiding bars 32. More preferentially, the respective guiding bars 32 may be parallel to one another.

Moreover, each first operative group 26 and the respective second operative group 27 may be movably coupled to the respective guiding bars 32. In particular, guiding bars 32 may define direction D1.

Preferentially, guiding bars 32 may be transversal, preferentially perpendicular, to central axis A and/or longitudinal axes C.

In further detail, each support group 30 may comprise a support plate 33, preferentially movably coupled to support structure 28, preferentially the respective support column 29. Preferentially, the respective guide bars 32 may be mounted on the respective support plate 33.

Preferentially but not necessarily, package forming apparatus 10 may further comprise an actuation unit 37 configured to selectively actuate the respective linear movement of the respective first operative group 26 and/or of the respective second operative group 27 along the respective linear guide system 31 so as to selectively control each operative device 25 between the respective rest configuration and the respective active configuration.

In particular, actuation unit 37 may be configured to control each first operative group 26 and the respective second operative group 27 between the respective first position and the respective second position.

Preferentially, control of each operative device 25 in the respective active configuration is such that the respective first operative group 26 and the respective second operative group 27 form the respective cross-section being laterally displaced from central axis A.

In more detail, each cross-section may lie in a respective central plane being (substantially) parallel to central axis A.

According to some alternative embodiments, control of each operative device 25 in the respective active configuration is such that the respective first operative group 26 and the respective second operative group 27 form the respective cross-section being parallel to and comprising a portion of central axis A.

According to some possible embodiments, one wants to obtain packages 2 for which at least one of the respective first transversal sealing band 5 and of the respective second transversal sealing band may be laterally displaced from the respective longitudinal axis B, in particular packages 2, each having a respective slanted top panel and a respective first transversal sealing band 5 that is not arranged in the middle of the respective top panel. In particular, such packages 2 comprises the respective top panel being formed by two portions having different dimensions from one another, the respective first transversal sealing band 5 being interposed between the two portions. In order to produce such packages 2, it may be advantageous to laterally displace the formed cross-section once the cross-section has been transversally sealed.

Therefore, actuation unit 37 may be also configured to linearly move each operative device 25 along the respective linear guide system 31, preferentially the respective one or more guide bars 32, after control of operative device 25 in the respective active configuration, and in particular maintaining thereby operative device 25 in the respective active configuration.

More specifically, actuation unit 37 may be configured to simultaneously move each first operative group 26 and the respective second operative group 27 along the respective linear guide system 31, preferentially the respective one or more guide bars 32, after having moved each first operative group 26 and the respective second operative group 27 towards one another and while maintaining each first operative group 26 and the respective second operative group 27 approached to one another.

In further detail, actuation unit 37 may be configured to move each first operative group 26 and the respective second operative group 27 in the respective second position, and afterwards to contemporaneously move each first operative group 26 and the respective second operative group 27 along the one or more guide bars 32.

Such a solution allows to laterally displace the respective cross-sections away from central axis A, thereby allowing to produce packages 2 having e.g. the respective first transversal sealing band 5 displaced from the respective longitudinal axis B. In particular, in the case that the respective cross-section is already laterally displaced from central axis A prior to the lateral displacement, the respective cross-section is further laterally distanced from central axis A.

Moreover, such a solution may be of advantage when producing packages having a slanted top panel.

Preferentially, according to such a solution, already when forming the respective cross-section, the respective cross-section is - during its formation - laterally displaced from the respective central axis A.

With particular reference to Figures 3 to 10, actuation unit 37 may comprise:
- one or more cam mechanisms 38, in the specific case shown two, each one associated to one respective operative device 25, preferentially the respective support group 30, and being coupled to the respective first operative group 26 and the respective second operative group 27; and
- one or more actuators 39, in the specific embodiment disclosed two, each one coupled to one respective cam mechanism 38.

Each actuator 39 may be, for example, a motor, preferentially an electrical motor.

In further detail, each cam mechanism 38 may comprise one or more cam profiles 40, in the specific case shown two, and one or more cam follower systems 41, in the specific case shown two, each one coupled to and configured to interact with one respective cam profile 40.

Preferentially, one cam follower system 41 may be coupled to the respective first operative group 26 and another cam follower system 41 may be coupled to the respective second operative group 27.

Alternatively, one cam follower system 41 may be coupled to one of the respective first operative group 26 and the respective second operative group 27.

In particular, each cam follower system 41 may couple the respective cam profile 40 to the respective first operative group 26 or to the respective second operative group 27.

Moreover, each actuator 39 may be coupled to the respective cam profile(s) 40 of the respective cam mechanism 38 and is configured to actuate a relative movement between the respective support group 30 and the respective cam profile(s) 40 so as to control the respective operative device 25 between the respective rest configuration and the respective active configuration due to interaction of the respective cam follower system 41 with the respective cam profile 40, preferentially leading, in use, to linear movement of the respective first operative group 26 and/or the respective second operative group 27 along the respective guide system 31, preferentially the respective one or more guide bars 32.

Preferentially, each actuator 39 may be configured to actuate a relative movement so as to actuate a linear movement, preferentially along direction D1, of the respective first operative group 26 and of the respective second operative group 27 towards or away from one another.

Preferentially, each cam profile 40 may comprise and/or be realized in the form of a channel, preferentially provided on a respective carrier structure 42 of the respective cam mechanism 38 and being, delimited between at least two engagement surfaces 43.

Preferentially, each cam follower system 41 may be configured to engage with the respective two engagement surfaces 43. For this reason, each cam follower system 41 may have a respective cam roller 44, which is positioned within the respective channel, preferentially engaging the respective two engagement surfaces 43.

Furthermore, each cam follower system 41 may have a transmission mechanism 45 carrying the respective cam roller 44 and being connected to the respective first operative group 26 or the respective second operative group 27.

Moreover, each transmission mechanism 45 is configured to transfer a respective movement of the respective cam roller 44 along the respective cam profile 40, preferentially the respective two engagement surfaces 43, preferentially as a result of the respective actuator 39 moving carrier structure 42, to the respective first operative group 26 or the respective second operative group 27 resulting in the respective linear movement.

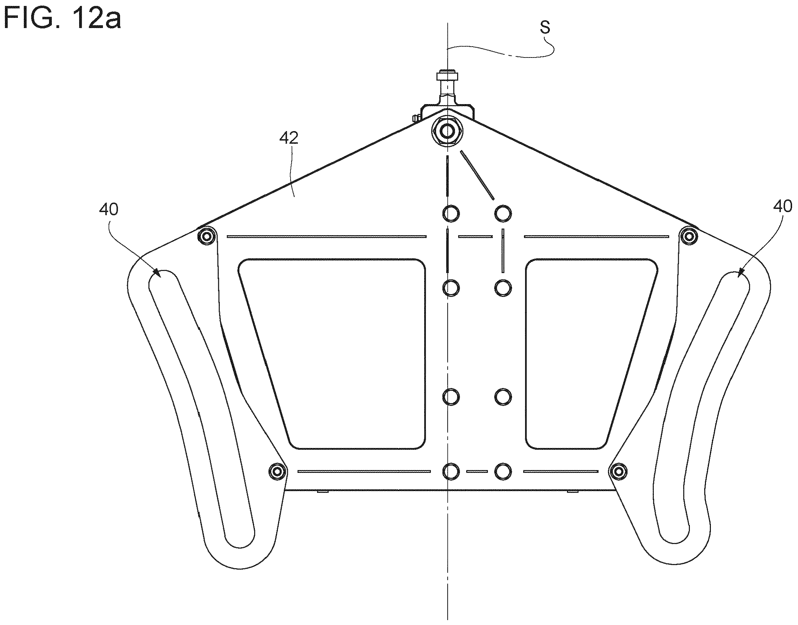

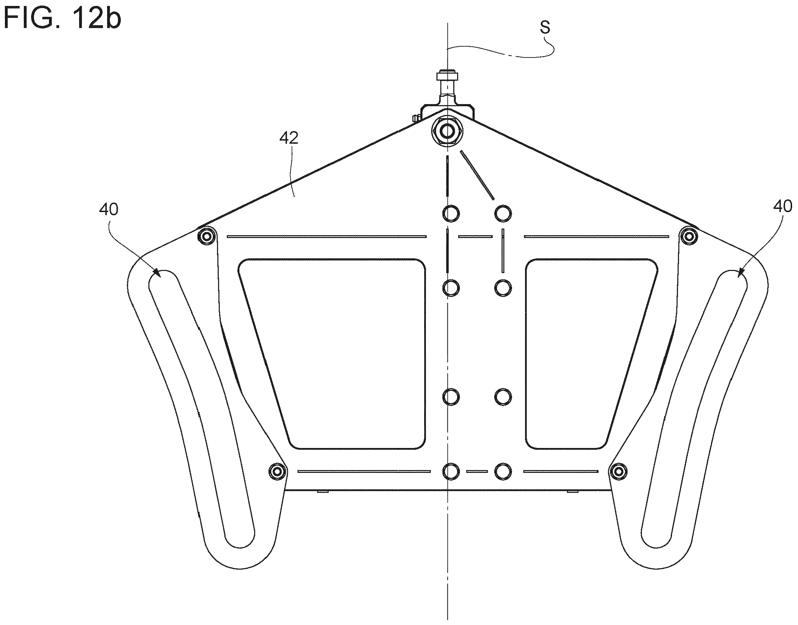

Preferentially but not necessarily and with particular reference to Figures 12a and 12b, cam mechanism 38 may comprise two cam profiles 40.

With reference to Figure 12b, the two cam profiles 40 may be symmetric with respect to a mirror axis S interposed between the two cam profiles 40. Preferentially, mirror axis S may be parallel to longitudinal axis C and/or central axis A.

Such a solution allows that during control of each operative device 25 from the respective rest configuration to the respective active configuration, the respective cam follower systems 41 may interact with the respective cam profile 40, preferentially leading to a simultaneous linear movement of the respective first operative group 26 and the respective second operative group 27 along the respective linear guide system 31 and towards one another. In this case, operative devices 25 are not moved along the respective guide systems 31 after control of the operative devices 25 in the respective active configuration.

Alternatively (as shown in Figure 12a), the two cam profiles 40 may be asymmetric with respect to the respective mirror axis S.

Such a solution allows that after having reached the respective active configuration the respective operative device 25 linearly moves along the respective linear guide system 31 and along direction D1. This allows to (further) laterally displace the respective cross-section with respect to central axis A.

Additionally, such a solution may also allow to apply different motion profiles to the respective first operative group 26 and the respective second operative group 27 during control of the respective operative device 25 from the respective rest configuration to the respective active configuration.

With particular reference to Figure 3, each actuation unit 37 may comprise one or more coupling bars 46, in the specific case shown two, coupling the respective actuator 39 to the respective cam mechanism 38, preferentially the respective carrier structure 42.

Additionally, each actuation unit 37 may also comprise an endless belt 47 coupled to the respective actuator 39 and carrying the respective coupling bar 46 such that actuation of actuator 39 leads to advancement of the respective endless belt 47, which again leads to a linear movement of the respective coupling bar 46, which then results in movement of the respective carrier structure 42.

With particular reference to Figures 3 to 6, each first operative group 26 may comprise a first half-shell 51 and the respective second operative group 27 may comprise a second half-shell 52 configured to at least partially form in cooperation with the respective first half-shell 51 tube 4.

Preferentially, each first half-shell 51 and each respective second half-shell 52 may be movable between a respective first limit position and a respective second limit position, preferentially when the respective operative device 25 is controlled in, respectively, the respective rest configuration and the respective active configuration.

Moreover, each first half-shell 51 and each respective second half-shell 52 may be moved in the respective second limit position with the respective first operative group 26 and the respective second operative group 27 being moved between the respective first position towards the respective second position.

Additionally, each first half-shell 51 and each respective second half-shell 52 may engage with and exert a force on tube 4 for at least partially forming tube 4 while being positioned in the respective second limit position.

According to some possible embodiments, each first half-shell 51 and each second half-shell 52 are subjected to an angular movement when moving between the first limit position and the second limit position.

According to some possible embodiments, each first half-shell 51 is rotatably coupled to a portion of the first operative group 36 and each second half-shell 52 is rotatably coupled to a portion of the second operative group 37.

Preferentially but not necessarily, package forming apparatus 10 may also comprise one or more control devices 53, each one configured to selectively control one respective first half-shell 51 and the respective second half-shell 52 between the respective first limit position and the respective second limit position.

More specifically, each control device 53 may comprise:
- one or more engagement surface profiles 54, in the specific case two, extending along a direction D3 parallel to direction D1;
- one or more cam following elements 55, in the specific case two, each one coupled to the respective first half-shell 51 or the respective second half-shell 52 and engaging the respective engagement surface profile 54 and being movable along the respective engagement surface profile 54; and
- one actuator member 56, in the specific case two, configured to linearly move the respective engagement surface profiles 54 along a direction D4 transversal to direction D3 and such to move the respective first half-shell 51 and the respective second half-shell 52 between the respective first limit position and the respective second limit position.

In more detail, each cam following element 55 may be coupled to the respective engagement surface profile 54 such that movement of the respective engagement surface profile 54 along direction D4 also leads to movement of the respective cam following element 55 in direction D4.

Moreover, each cam following element 55 is coupled to the respective first half-shell 51 or the respective second half-shell 52 such that movement of the respective cam following element 55 along direction D4 leads to movement of the respective first half-shell 51 or the respective second half-shell 52 between the respective first limit position and the respective second limit position.

In particular, direction D4 is parallel to direction D2 and/or central axis A.

It should be noted that one engagement surface profile 54 and one respective cam following element 55, such as a cam roller, may be associated to the respective first half-shell 51 and the other respective engagement surface profile 54 and the other respective cam following element 55, such as another cam roller, may be associated to the respective second half-shell 52.

Preferentially, each engagement surface profile 54 may be movably connected to the respective support group 30, preferentially the respective carrier structure 42. In other words, each engagement surface profile 54 may be configured to be subject to a relative movement with respect to the respective carrier structure 42.

By having each engagement surface profile 54 extending along direction D3 it is possible to linearly move the respective first operative group 26 and/or the respective second operative group 27 along the respective linear guide system 31 by operation of actuation unit 37 without inducing a movement of the respective first half-shell 51 and the respective second half-shell 52. Movement of the respective first half-shell 51 and the respective second half-shell 52 between the respective first limit position and the respective second limit position is obtained only by operation of the respective actuator member 56.

Moreover, each actuator member 56 may be configured such to induce a relative movement of the respective engagement surface profiles 54 with respect to the respective support group 30.

Each control device 53 may comprise one or more cam members 57, each having a respective groove and each cam following element 55 may be arranged within one respective groove. Preferentially, each groove may comprise the respective engagement surface profile 54. In other words, each groove defines the respective engagement surface profile 54.

Furthermore, each control device 53 may comprise a control bar 58 coupled to the respective actuator member 56, preferentially by means of an endless belt 59, and to the respective cam members 57.

With particular reference to Figures 3 to 11, each operative device 25 may comprises a pair of movable interaction tabs 63, each pair of interaction tabs 63 being configured to interact, in use, with tube 4 from opposite sides thereof and being configured to move with respect to one another. In particular, one of the respective first operative group 26 and the respective second operative group 27, in the specific case shown the respective second operative group 27, may comprise the respective pair of interaction tabs 63.

Package forming apparatus 10 may also comprise one or more actuation devices 64, each one operatively coupled to one respective pair of interaction tabs 63 and being configured to modify the relative position of the respective interaction tabs 63 of the respective pair of interaction tabs 63.

Preferentially, each actuation device 64 may comprise:
- an interaction surface profile 65 extending along direction D3;
- a cam follower 66 coupled to the respective pair of interaction tabs 63 and engaging the respective interaction surface profile 65 and being movable along the respective interaction surface profile 65; and
- an actuating system 67 configured to linearly move the respective interaction surface profile 65 along direction D4 such to modify the relative position of the respective pair of interaction tabs 63 with respect to one another.

In more detail, each cam follower 66 may be arranged such that movement of the respective interaction surface profile 65 along direction D4 also results in movement of the respective cam follower 64 along direction D4.

Moreover, each cam follower 66 may be coupled to the respective pair of interaction tabs 63 such that movement of the respective cam follower 66 along direction D4 leads to a modification of the relative position of the respective pair of interaction tabs 63.

In further detail, each actuation device 64 may comprise a cam element 68 having a groove and each cam follower 66 may be arranged within the respective groove. Moreover, each groove may comprise the respective interaction surface profile 65. In other words, each groove defines the respective interaction surface profile 65. Moreover, actuating system 67 may be coupled to cam element 68 so as to move the respective interaction surface profile 65 along direction D4.

By having each interaction surface profiles 65 extending along direction D3 it is possible to linearly move the respective first operative group 26 and/or the respective second operative group 27 along the respective linear guide system 31 by operation of actuation unit 37 without inducing a movement of the respective pair of interaction tabs 63 with respect to one another. Movement of the respective first operative group 26 and/or the respective second operative group 27 along the respective linear guide system 31 does not lead to any movement of the respective pair of interaction tabs 63 as the respective cam follower 66 moves along interaction surface profile 65, preferentially within the respective groove.

Moreover, each actuating system 67 may be configured such to induce a relative movement of the respective interaction surface profiles 65 with respect to the respective support group 30.

In further detail, each cam element 68 may be movably connected to a respective pillar 69 of support structure 28, preferentially each pillar 69 being parallel to support columns 29.

Furthermore, each actuation device 64 may comprise a control bar 70 coupled to the respective actuating system 67, preferentially by means of an endless belt 71, and to the respective cam element 68.

With particular reference to Figures 2 to 11, each operative device 25 may comprise a respective sealing element 75 and a respective counter-sealing element 76 configured to transversally seal in cooperation with one another tube 4, preferentially along the respective cross-section.

Preferentially but not necessarily, first operative group 26 may comprise the respective sealing element 75 and the respective second operative group 27 may comprise the respective counter-sealing element 76.

More specifically, each sealing element 75 and the respective counter-sealing element 76 may be configured to at least transversally compress, in particular flat-lay and squeeze, and to transversally seal tube 4, in particular during advancement of tube 4 along tube advancement path Q and while the respective operative device 25 is controlled in the respective active configuration.

Moreover, each sealing element 75 and the respective counter-sealing element 76 may be configured to engage tube 4 from opposite sides thereof.

In further detail, each sealing element 75 may comprise a source configured to generate the energy needed to obtain the sealing effect. For example, sealing element 75 may be a sonotrode having ultrasound-emitters or sealing element 75 may have an electromagnetic induction source. Each counter-sealing element 76 may be a passive element (i.e. not having an active source). For example, counter-sealing element 47 may be a metal anvil or a deformable pad.

Additionally, each operative device 25 may comprise at least one cutting element configured to transversally cut tube 4. Preferentially, each cutting element may be configured to transversally cut tube 4 after sealing of tube 4 by means of the respective sealing assembly.

In further detail and with particular reference to Figure 3, conveying unit 34 may comprise one or more actuators 77, one or more control bars 78, each one coupled to one respective actuator 77 and to one respective support group 30, in particular by means of a respective endless belt 79.

Preferentially but not necessarily, each actuator 39 and/or each actuator member 56 and/or each actuating system 67 and/or each actuator 77 may comprise and/or may consist of a respective (electrical) motor, preferentially a respective servomotor.

In use, packaging machine 1 produces packages 2 filled with the pourable product.

In more detail, conveying device 11 advances web 3 along web advancement path P. Tube forming and sealing device 12 forms tube 4 from the advancing web 3 and longitudinally seals tube 4. Additionally, filling device 13 fills tube 4 with the pourable product and package forming apparatus 10 forms, transversally seals and transversally cuts tube 4 so as to obtain packages 2.

In further detail, during operation of package forming apparatus 10, operative devices 25 manipulate, preferentially transversally seal, transversally cut and at least partially form tube 4.

During operation of each operative device 25, the respective first operative group 26 and the respective second operative group 27 are cyclically and linearly moved towards and away from one another so as to cyclically control the respective operative device 25 between the respective rest configuration and the respective active configuration.

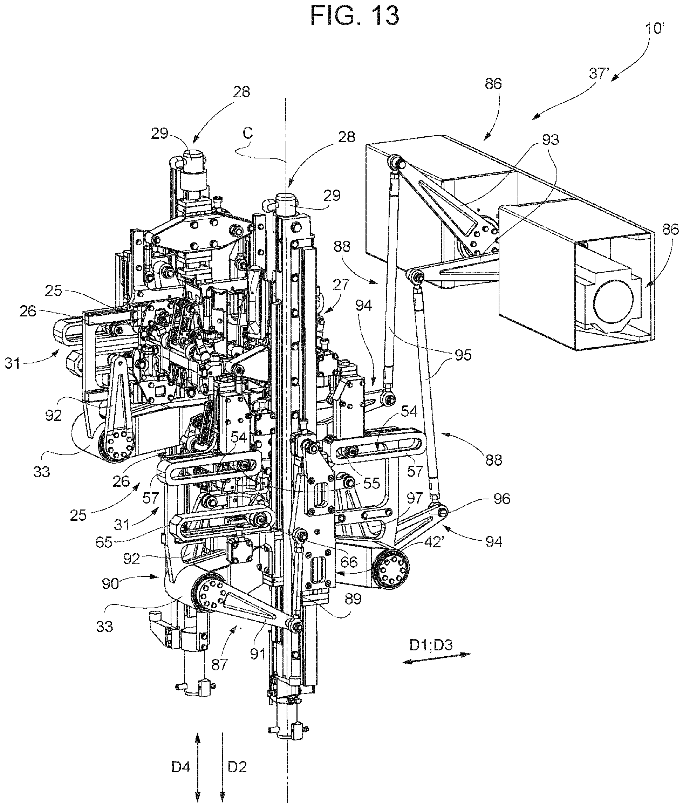

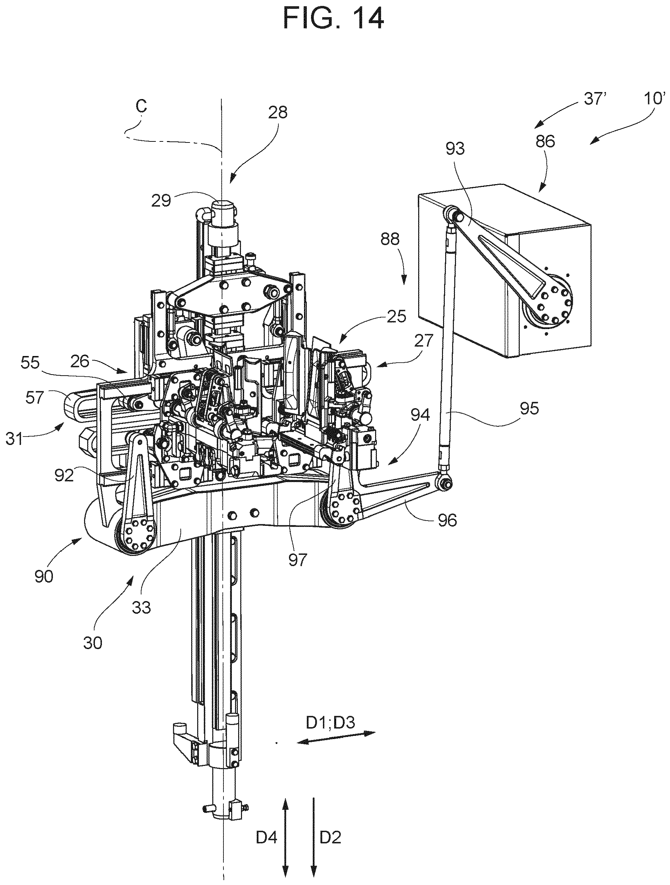

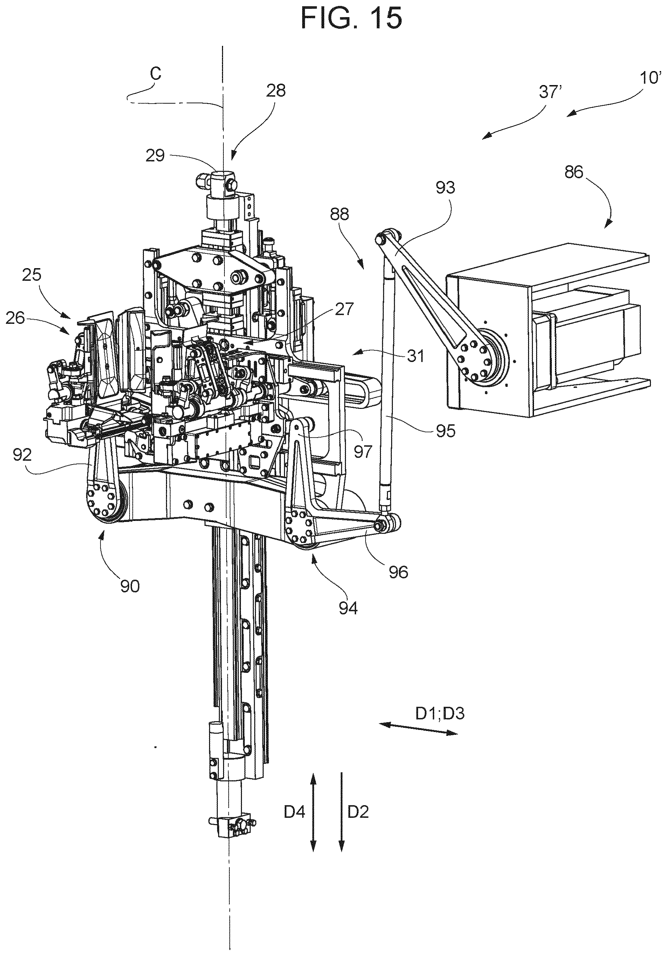

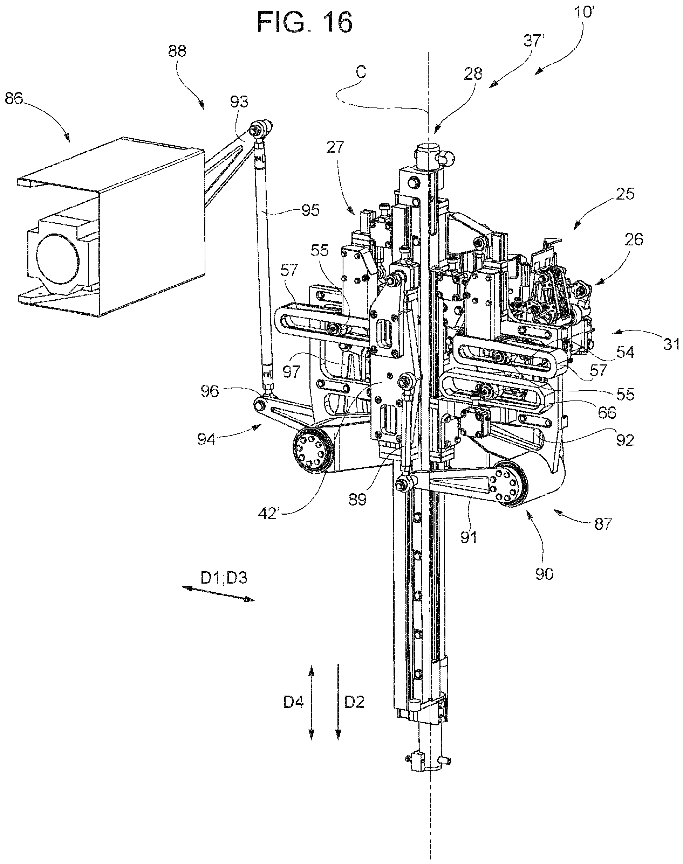

With reference to Figures 13 to 16, number 10' indicates an alternative embodiment of a package forming apparatus according to the present invention; as package forming apparatus 10' is similar to packaging apparatus 10, the following description is limited to the differences between them, and using the same references, where possible, for identical or corresponding parts.

Package forming apparatus 10' differs from package forming apparatus 10 in comprising actuation unit 37' . As actuation unit 37' is similar to actuation unit 37, the following description is limited to the differences between them, and using the same references, where possible, for identical or corresponding parts.

Actuation unit 37' differs from actuation unit 37 in comprising for each operative device 25 a respective first actuator coupled to the respective first operative group 26 and a respective second actuator 86 coupled to the respective second operative group 27.

In particular, each first actuator and each second actuator 86 can comprise, even more particular consist of, an electrical motor.

Each one of the first actuator and the respective second actuator 86 are configured to linearly move, respectively, the respective first operative group 26 and the respective second operative group 27 along linear guide system 31, in particular so as to selectively control each operative device 25 between the respective rest configuration and the respective active configuration, and in particular to also linearly move the respective operative device 25 along linear guide system 31 after control of the respective operative device 25 in the respective active configuration.

Thus, while in the case of actuation unit 37 a single actuator 39 is coupled to each operative device 25 by means of the respective cam mechanism 38 for controlling the linear movement of the respective first operative group 26 and the respective second operative group 27, in the case of actuation unit 37', actuation unit 37' comprises for each operative device 25 two actuators (namely the respective first actuator and the respective second actuator 86), each one being configured to solely control the linear movement of the respective first operative group 26 or the respective second operative group 27. In this way, it is possible to obtain further increased production velocities.

In further detail, actuation unit 37' comprises for each operative group 25 one first lever mechanism 87 coupling the respective first operative group 26 and the respective first actuator with one another and a respective second lever mechanism 88 coupling the respective second operative group 27 and the respective second actuator 86 with one another.

In particular, the working principle of each first lever mechanism 87 differs from the working principle of the respective second lever mechanism 88. This is due to the specific positioning of the respective first actuator and the respective second actuator 86.

In more detail, a position of the first actuator corresponds to the position of actuator 39 of actuation unit 37. Additionally, each first actuator is coupled to the respective first lever mechanism 87 in the same manner as each actuator 39 is coupled to the respective cam mechanism 38.

Preferentially but not necessarily, the first actuator corresponds to actuator 39 of the actuation unit 37.

Advantageously, actuation unit 37' comprises for each operative device 25 one respective coupling bar 46 coupling the respective first actuator with the respective first lever mechanism 87.

Moreover, actuation unit 37' comprises for each operative device 25 one respective endless belt 47 carrying the respective coupling bar 46.

With particular reference to Figures 13 to 16, each first lever mechanism 87 comprises a carrier structure 42' connected to the respective coupling bar 46.

Additionally, each first lever mechanism 87 comprises a first lever bar 89 angularly movably connected to the respective carrier structure 42' and a transmission group 90 angularly movably connected to first lever bar 89 and being connected to the respective first operative group 26.

More specifically, each transmission group 90 comprises a first bar 91 angularly movably connected to the respective first lever bar 89, a second bar 92 connected to the respective first operative group 26, in particular through a further connection lever, and a coupling element connecting first bar 91 with second bar 92. In particular each first bar 91 and the respective second bar 92 are fixed to opposite end portions of the respective coupling element.

Even more specifically, each coupling element extends along an axis and is angularly movably connected to the respective support plate 33.

In particular, actuation of the first actuator leads to advancement of the respective endless belt 47, which again leads to a linear movement of the respective coupling bar 46, which then results in movement of the respective carrier structure 42'. Moreover, movement of the respective carrier structure 42' can induce an angular movement of the respective first lever bar 89, which again induces a movement of the respective transmission group 90, which then leads to the linear movement of the respective first operative group 26. In particular, movement of first lever bar 89 induces an angular movement of the respective coupling element about the respective axis.

With particular reference to Figures 13 to 16, each second lever mechanism 88 comprises a first arm 93 connected to second actuator 86, in particular an axle of second actuator 86, a second arm 94 connected to the respective second operative group 27 and a transmission bar 95 connected, in particular hinged, to first arm 93 and second arm 94.

In further detail, each second arm 94 is angularly movably mounted to the respective support group 30, in particular the respective support plate 33.

Moreover, each second arm 94 comprises a first portion 96 connected to the respective transmission bar 95 and a second portion 97 connected to the respective second operative group 27, in particular through a further connection lever.

Advantageously, each first portion 96 and the respective second portion 97 are transversally arranged with respect to one another, e.g. so as to define a V-shape.

In particular, each first portion 96 and the respective second portion 97 are formed in a single piece.

In use, each second actuator 86 induces a movement of the respective transmission bar 95 through the first arm 93. Movement of the transmission bar 95 induces an angular movement of the respective second arm 94, which again leads to movement of the respective second operative group 27.

Operation of package forming apparatus 10' is similar to the use of package forming apparatus 10. In the following, we describe the difference between the use of package forming unit 10 and package forming unit 10'.

In particular, the difference resides in how the linear movement of each first operative group 26 and the respective second operative group 27 is controlled. In the case of package forming apparatus 10, the linear movement of each first operative group 26 and the respective second operative group 27 is controlled by one single actuator 39 acting on the respective cam mechanism 38, while in the case of package forming apparatus 10' the linear movement of each first operative group 26 and the respective second operative group 27 is controlled by, respectively, the corresponding first actuator and the corresponding second actuator 86.

In more detail, the linear movement of each first operative group 26 is controlled by the respective first actuator and the linear movement of each second operative group 27 is controlled by the respective second actuator 86.

More specifically, each first actuator controls movement of the respective first operative group 26 through the respective first lever mechanism 87 and each second actuator 86 controls movement of the respective second operative group 86 through the respective second lever mechanism 88.

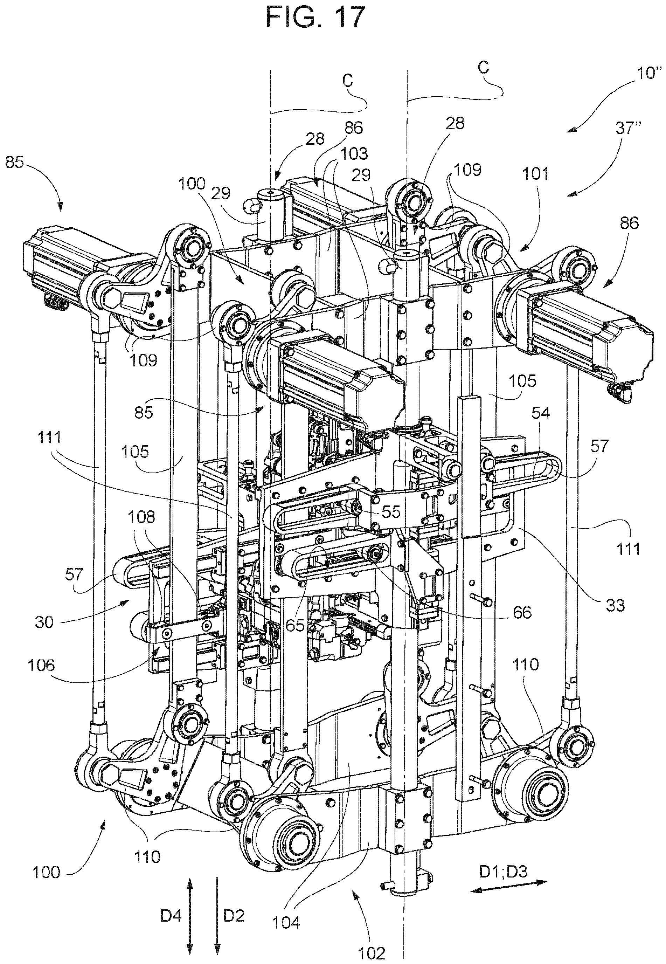

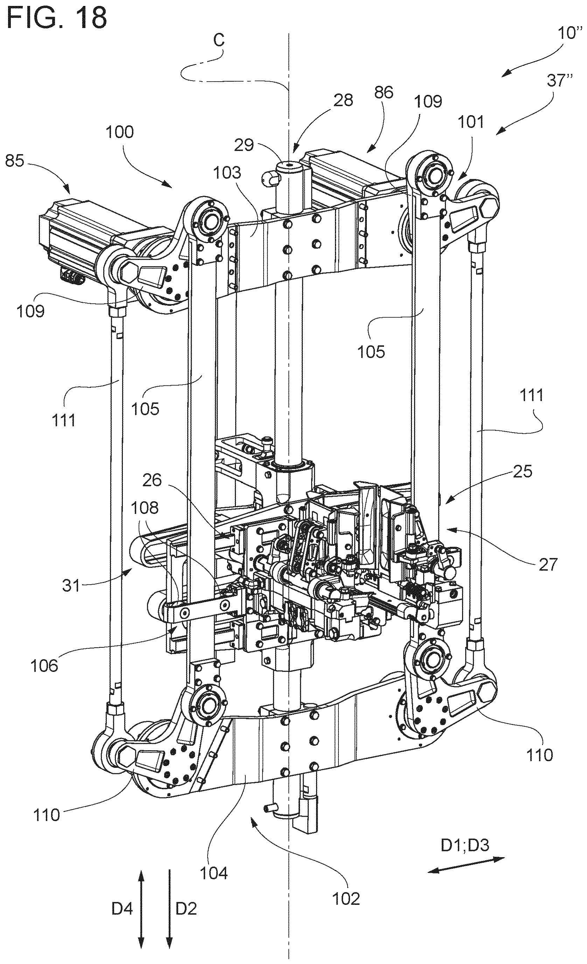

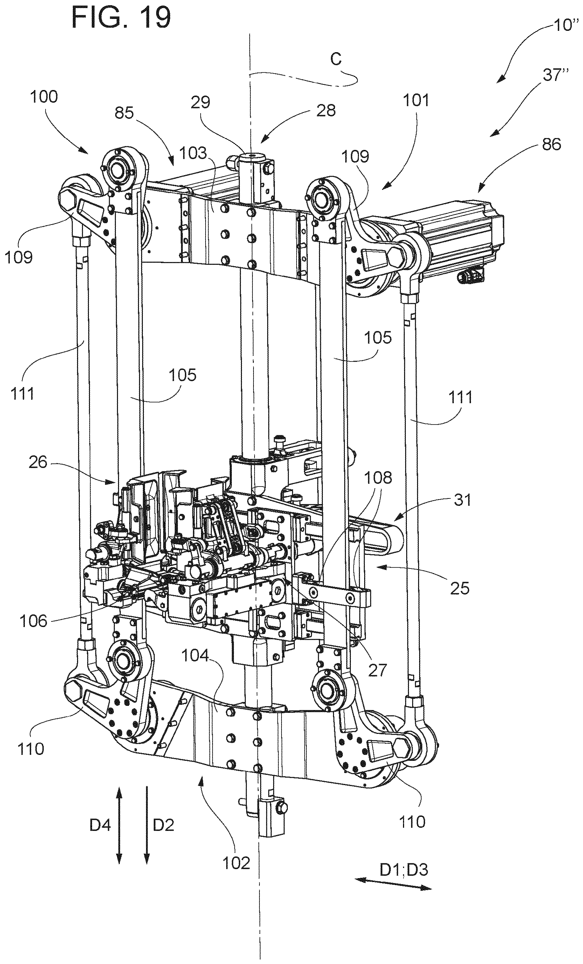

With reference to Figures 17 to 19, number 10" indicates an alternative embodiment of a package forming apparatus according to the present invention; as package forming apparatus 10'' is similar to packaging apparatus 10', the following description is limited to the differences between them, and using the same references, where possible, for identical or corresponding parts.

Package forming apparatus 10'' differs from package forming apparatus 10' in comprising actuation unit 37".

Actuation unit 37" is similar to actuation unit 37' but differs from actuation unit 37' in the arrangement of first actuators 85 and second actuators 86.

Additionally, actuation unit 37" comprises for each operative device 25 at least one first coupling mechanism 100 coupling first operative group 26 and the respective first actuator 85 with one another and a second coupling mechanism 101 coupling second operative group 27 and the respective second actuator 86 with one another.

Moreover, actuation unit 37" comprises for each operative device 25 a support 102 coupled to, in particular moveably coupled to, the respective support structure 28, in particular the respective support pillar 29.

More specifically, each support 102 comprises a first plate 103 and a second plate 104 coupled to, in particular moveably coupled to, the respective support structure 28, in particular the respective support pillar 29. Even more specifically, each first plate 103 and the respective second plate 104 interpose the respective support group 30, in particular the respective support plate 33, between one another.

More specifically, in use, each support group 30, in particular support plate 33, moves between the respective first plate 103 and the respective second plate 104.

Advantageously, each support 102, in particular the respective first plate 103, carries the respective first actuator 85 and the respective second actuator 86. Additionally, each support 102, in particular the respective first plate 103 and the respective second plate 104, carry at least portions of first coupling mechanism 101 and second coupling mechanism 102.

In further detail, each first actuator 85 and each second actuator 86 are mounted to the respective first plate 103. In particular, each first actuator 85 and the respective second actuator 86 are mounted to opposite portions of the respective first plate 103.

With particular reference to Figures 17 to 19, each first coupling mechanism 100 and each second coupling mechanism 102 comprises a respective control bar 105, e.g. parallel to longitudinal axis A and/or longitudinal axis C, coupled to, respectively, the respective first actuator 85 and the respective second actuator 86 and a respective coupling group 106 connected to, respectively, the respective first operative group 26 and the respective second operative group 27.

Moreover, each control bar 105 is configured to interact with the respective coupling group 106 so as to control the linear movement of the respective first operative group 26 or the respective second operative group 27.

In particular, movement of each control bar 105 by means of the respective first actuator 85 or the respective second actuator 86 results in a movement of the respective coupling group 106, which again leads to movement of the respective first operative device 26 or the respective second operative device 27.

In even further detail, each coupling group 106 comprises a respective passage and the respective coupling bar 105 extends through the respective passage.

Additionally, each coupling group 106 comprises at least two abutment elements 108, in the specific case shown, rollers, partially delimiting the respective passage. A portion of each coupling bar 105 is interposed between the respective abutment elements 108 and is configured to abut against at least one of the abutment elements 108 when being moved by actuation of the respective first actuator 85 or the respective second actuator 86 and so as to linearly move the respective first operative group 26 or the respective second operative group 27.

With reference to Figures 17 to 19, each first actuator 85 and each second actuator 86 are configured to actuate a movement of the respective coupling bar 105 along an auxiliary direction having a component parallel to direction D1 and such that interaction of coupling bar 105 with the respective coupling group 106, in particular at least one of the respective abutment elements 108, leads to the linear movement of coupling group 106 along direction D1 and therewith also to the linear movement of the respective first operative group 26 or the respective second operative group 27 along direction D1.

In further detail, each first coupling mechanism 100 and each second coupling mechanism 101 comprises a respective first arm 109 rotatably connected to the respective first plate 103 and connected to the respective first actuator 85 or the respective second actuator 86, more specifically a respective axle thereof, and a second arm 110 rotatably connected to the respective second plate 104.

Advantageously, each first arm 109 and each second arm 110 have a V-shape.

Each coupling bar 105 is connected to the respective first arm 109 and the respective second arm 110.

In further detail, each first coupling mechanism 100 and each second coupling mechanism 101 comprises an auxiliary bar 111, in particular parallel to the respective coupling bar 105, connected to the respective first arm 109 and the respective second arm 110.

More specifically, each coupling bar 105 and the respective auxiliary bar 111 are connected to opposite portions of the respective first arm 109 and to opposite portions of the respective second arm 110.

Operation of package forming apparatus 10" is similar to operation of package forming apparatus 10'.

In the following, we describe the difference between operation of package forming apparatus 10" and package forming apparatus 10'.

In particular, the difference resides in the specific way how the linear movement of first operative devices 26 and second operative devices 27 are induced.

More specifically, the linear movement of each first operative device 26 and of each second operative device 27 is controlled by controlling movement of the respective control bar 105.

The advantages of package forming apparatus 10, 10', 10" and/or packaging machine 1 according to the present invention will be clear from the foregoing description.

In particular, package forming apparatus 10, 10', 10'' comes along with a simple structure and kinematics.

Additionally, package forming apparatus 10, 10', 10"' comes along with reduced weight with respect to the package forming apparatuses known in the art.

Moreover, during operation of package forming apparatus 10, 10', 10'' one observes improved sealing pressure distributions.

Clearly, changes may be made to package forming apparatus 10, 10', 10'' and/or packaging machine 1 as described herein without, however, departing from the scope of protection as defined in the accompanying claims.

## Claims

1. Package forming apparatus (10, 10', 10'') for a packaging machine (1) and configured to manipulate a tube (4) of packaging material for obtaining packages (2) from the tube (4);
wherein the package forming apparatus (10, 10', 10'') comprises at least one operative device (25) having a first operative group (26) and a second operative group (27) configured to manipulate in cooperation with one another the tube (4) for forming the packages (2);
wherein each first operative group (26) and the respective second operative group (27) are configured to execute a relative movement with respect to one another;
wherein each operative device (25) comprises at least one support group (30) and the respective first operative group (26) and the respective second operative group (27) are movably connected to the support group (30);
wherein each operative device (25) is controllable between a rest configuration and an active configuration in which the respective first operative group (26) and the respective second operative group (27) are, respectively, withdrawn from and approached to one another;
wherein each support group (30) comprises a linear guide system (31);
wherein the respective first operative group (26) and/or the respective second operative group (27) is/are linearly movably connected to the linear guide system (31) and such that the respective operative device (25) is controllable between the respective rest configuration and the respective active configuration by linearly moving the respective first operative group (26) and/or the respective second operative group (27) along the linear guide system (31) .

2. Package forming apparatus according to claim 1, and further comprising an actuation unit (37, 37', 37") configured to selectively actuate a linear movement of the respective first operative group (26) and/or of the respective second operative group (27) along the linear guide system (31) so as to selectively control each operative device (25) between the respective rest configuration and the respective active configuration.

3. Package forming apparatus according to claim 2, wherein the actuation unit (37, 37', 37'') is also configured to linearly move each operative device (25) along the linear guide system after control of the operative device (25) in the respective active configuration.

4. Package forming apparatus according to claim 2 or 3, wherein the actuation unit (37) comprises:
- one or more cam mechanisms (38) each one associated to one respective support group (30) and being coupled to the respective first operative group (26) and the respective second operative group (27); and
- one or more actuators (39), each one coupled to one respective cam mechanism (38);
wherein each cam mechanism (38) comprises one or more cam profiles (40) and one or more cam follower systems (41) coupled to the respective first operative group (26) and/or the respective second operative group (27), each cam follower system (41) being coupled to one respective cam profile (40) ;
wherein each actuator (39) is coupled to the cam profiles (40) of the respective cam mechanism (38) and is configured to actuate a relative movement between the respective support group (30) and the respective cam profiles (40) so as to control the respective operative device (25) between the respective rest configuration and the respective active configuration due to interaction of the respective cam follower system (41) with the respective cam profile (40) .

5. Package forming apparatus according to claim 4, wherein each cam mechanism (38) comprises two cam profiles (40) and two cam follower systems (41), each one coupled to one respective cam profile (40);
wherein one of the cam follower systems (41) is coupled to the first operative group (26) and the other cam follower system (41) is coupled to the respective second operative group (27);
wherein each actuator (39) is configured to actuate a relative movement between each cam profile (40) and the respective support group (30) so as to actuate a linear movement of the respective first operative group (26) and of the respective second operative group (27) towards or away from one another due to the interaction of each cam follower system (41) with the respective cam profile (40).

6. Package forming apparatus according to any one of claims 1 to 3, wherein the actuation unit (37', 37'') comprises at least one first actuator (39, 85) coupled to one respective first operative group (26) and at least one second actuator (86) coupled to one respective second operative group (27);
wherein the first actuator (39, 85) and the second actuator (86) are configured to linearly move, respectively, the respective first operative group (26) and the respective second operative group (27) along the linear guide system (31) so as to selectively control the operative device (25) between the respective rest configuration and the respective active configuration.

7. Package forming apparatus according to claim 6, wherein the actuation unit (37') comprises at least one first lever mechanism (87) coupling the first operative group (26) and the first actuator (39) with one another and at least one second lever mechanism (88) coupling the second operative group (27) and the second actuator (86) with one another;
wherein the actuation unit (37') comprises for each operative device (25) one respective coupling bar (46) coupling the respective first actuator (36) with the respective first lever mechanism (87);
wherein the first lever mechanism (87) comprises a carrier structure (42') connected to the respective coupling bar (46) ;
wherein each first lever mechanism (87) comprises a first lever bar (89) angularly movably connected to the respective carrier structure (42') and a transmission group (90) angularly movably connected to the first lever bar (89) and being connected to the respective first operative group (26) ;
wherein the second lever mechanism (88) comprises a first arm (93) connected to the second actuator (86), a second arm (94) connected to the respective second operative group (27) and a transmission bar (95) connected to the first arm (93) and the second arm (94).

8. Package forming apparatus according to claim 6, wherein the actuation unit (37'') comprises at least one first coupling mechanism (100) coupling the first operative group (26) and the first actuator (85) with one another and at least one second coupling mechanism (101) coupling the second operative group (27) and the second actuator (86) with one another;
wherein each one of the first coupling mechanism (100) and the second coupling mechanism (101) comprises a respective control bar (105) connected to, respectively, the first actuator (85) and the second actuator (86) and a respective coupling group (106) connected to, respectively, the first operative group (26) and the second operative group (27) ;
wherein the first actuator (85) and the second actuator (86) are configured to actuate a movement of the respective coupling bar (105) along an auxiliary direction having a component parallel to a direction (D1) of linear movement of the respective first operative group (26) and/or of the respective second operative group (27) along the respective linear guide system (31) and such that interaction of the coupling bar (105) with the coupling group (106) leads to a linear movement of the respective coupling group (106) along the direction of linear movement (D1).

9. Package forming apparatus according to any one of the preceding claims, wherein, in use, the tube (4) extends along a central axis (A);
wherein each linear guide system (31) is configured to guide a movement of the respective first operative group (26) and/or of the respective second operative group (27) along a direction (D1) substantially perpendicular to the central axis (A).

10. Package forming apparatus according to any one of the preceding claims, and further comprising a support structure (29) movably carrying each support group (30) and a conveying unit (34) configured to linearly move each support group (30) along an advancement direction (D2);
wherein each linear guide system (31) is configured to guide a movement of the respective first operative group (26) and/or of the respective second operative group (27) along a direction (D1) substantially perpendicular to the advancement direction (D2).

11. Package forming apparatus according to any one of the preceding claims, wherein each linear guide system (31) comprises at least one guiding bar (32) and the respective first operative group (26) and the respective second operative group (27) are movably coupled to the respective at least one guiding bar (32).

12. Package forming apparatus according to any one of the preceding claims, wherein each operative device (25) comprises a pair of movable interaction tabs (63), the pair of interaction tabs (63) being configured to interact, in use, with the tube (4) from opposite sides thereof and being configured to move with respect to one another;
wherein one of the respective first operative group (26) and the respective second operative group (27) comprises the respective pair of interaction tabs (63);
wherein each operative device (25) also comprises an actuation device (64) operatively coupled to the pair of interaction tabs (63) and being configured to modify the relative position of the interaction tabs (63) of the pair (26) of interaction tabs (63);
wherein each actuation device (64) comprises:
- an interaction surface profile (65) extending along a first direction (D3) parallel to a direction (D1) of linear movement of the respective first operative group (26) and/or of the respective second operative group (27) along the respective linear guide system (31);
- a cam follower (66) coupled to the respective pair of interaction tabs (63) and engaging the interaction surface profile (65) and being movable along the respective interaction surface profile (65); and
- an actuating system (67) configured to linearly move the interaction surface profile (65) along a second direction (D4) transversal to the first direction (D3);
wherein the cam follower (66) is coupled to the respective interaction surface profile (65) such that movement of the respective interaction surface profile (65) along the second direction (D4) also results in movement of the respective cam follower (64) along the second direction (D4) ;
wherein the cam follower (66) is coupled to the respective pair of interaction tabs (63) such that movement of the respective cam follower (66) along the second direction (D4) leads to a modification of the relative position of the respective pair of interaction tabs (63).

13. Package forming apparatus according to claim 12, wherein each actuating system (67) comprises a cam element (68) having a groove and each cam follower (66) is arranged within the respective groove, wherein the groove comprises the interaction surface profile (65).

14. Package forming apparatus according to any one of the preceding claims, wherein each first operative group (26) comprises a first half-shell (51) and the respective second operative group (27) comprises a second half-shell (52) ;
wherein the package forming apparatus (10, 10', 10'') also comprises a control device (53) configured to control each first half-shell (51) and the respective second half-shell (52) between a respective first limit position and a respective second limit position;
wherein the control device (53) comprises:
- one or more engagement surface profiles (54), each one extending along a first direction (D3) parallel to a direction (D1) of linear movement of the respective first operative group (26) and/or of the respective second operative group (27) along the respective linear guide system (31) ;
- one or more cam following elements (55), each one coupled to one of the respective first half-shell (51) and the respective second half-shell (52) and each engaging at least one respective engagement surface profile (54) and being movable along the respective engagement surface profile (54); and
- an actuator member (56) configured to linearly move the one or more engagement surface profiles (54) along a second direction (D4) transversal to the first direction (D3) ;
wherein each cam following element (55) is coupled to the respective engagement surface profile (54) such that movement of the respective engagement surface profile (54) along the second direction (D4) also leads to movement of the respective cam following element (55) along the second direction (D4);
wherein each cam following element (55) is coupled to the respective first half-shell (51) or the respective second half-shell (52) such that movement of the respective cam following element (55) along the second direction (D4) leads to movement of the respective first half-shell (51) or the respective second half-shell (52) between the respective first limit position and the respective second limit position.

15. Package forming apparatus according to claim 14, wherein each control device (53) comprises a cam member (57) having a groove and each cam following element (55) is arranged within the respective groove, wherein the groove comprises the engagement surface profile (54).

16. Packaging machine (1) for forming packages (2) of a pourable product from an advancing tube (4) formed and longitudinally sealed from a web of packaging material (4);
the packaging machine (1) comprises:
- a conveying device (11) configured to advance the web of packaging material (3) along a web advancement path (P) and for advancing the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10, 10', 10'') according to any one of the preceding claims.

## Amended claims

### Amended claims in accordance with Rule 137(2) EPC.

1. Package forming apparatus (10, 10', 10") for a packaging machine (1) and configured to manipulate a tube (4) of packaging material for obtaining packages (2) from the tube (4);
wherein the package forming apparatus (10, 10', 10") comprises at least one operative device (25) having a first operative group (26) and a second operative group (27) configured to manipulate in cooperation with one another the tube (4) for forming the packages (2);
wherein each first operative group (26) and the respective second operative group (27) are configured to execute a relative movement with respect to one another;
wherein each operative device (25) comprises at least one support group (30) and the respective first operative group (26) and the respective second operative group (27) are movably connected to the support group (30);
wherein each operative device (25) is controllable between a rest configuration and an active configuration in which the respective first operative group (26) and the respective second operative group (27) are, respectively, withdrawn from and approached to one another;
wherein each support group (30) comprises a linear guide system (31);
wherein the respective first operative group (26) and/or the respective second operative group (27) is/are linearly movably connected to the linear guide system (31) and such that the respective operative device (25) is controllable between the respective rest configuration and the respective active configuration by linearly moving the respective first operative group (26) and/or the respective second operative group (27) along the linear guide system (31),
the package forming apparatus (10, 10', 10'') further comprising a support structure (29) movably carrying each support group (30) and a conveying unit (34) configured to linearly move each support group (30) along an advancement direction (D2);
wherein each linear guide system (31) is configured to guide a movement of the respective first operative group (26) and/or of the respective second operative group (27) along a direction (D1) substantially perpendicular to the advancement direction (D2),
**characterized in that** the package forming apparatus (10, 10', 10'') comprises two operative devices (25),
wherein with the respective first operative group (26) and the respective second operative group (27) of a first operative device (25) being spaced apart from one another, a first passage is defined between the respective first operative group (26) and the respective second operative group (27) of the first operative device 25, and the respective first operative group (26) and the respective second operative group (27) of a second operative device (25) are arranged close to each other and pass through the first passage,
and wherein with the respective first operative group (26) and the respective second operative group (27) of the second operative device (25) being spaced apart from one another, a second passage is defined between the respective first operative group (25) and the respective second operative group (27) of the second operative device (25), and the respective first operative group (26) and the respective second operative group (27) of the first operative device (25) are arranged close to each other and pass through the second passage.

2. Package forming apparatus according to claim 1, and further comprising an actuation unit (37, 37', 37") configured to selectively actuate a linear movement of the respective first operative group (26) and/or of the respective second operative group (27) along the linear guide system (31) so as to selectively control each operative device (25) between the respective rest configuration and the respective active configuration.

3. Package forming apparatus according to claim 2, wherein the actuation unit (37, 37', 37") is also configured to linearly move each operative device (25) along the linear guide system after control of the operative device (25) in the respective active configuration.

4. Package forming apparatus according to claim 2 or 3, wherein the actuation unit (37) comprises:
- one or more cam mechanisms (38) each one associated to one respective support group (30) and being coupled to the respective first operative group (26) and the respective second operative group (27); and
- one or more actuators (39), each one coupled to one respective cam mechanism (38);
wherein each cam mechanism (38) comprises one or more cam profiles (40) and one or more cam follower systems (41) coupled to the respective first operative group (26) and/or the respective second operative group (27), each cam follower system (41) being coupled to one respective cam profile (40);
wherein each actuator (39) is coupled to the cam profiles (40) of the respective cam mechanism (38) and is configured to actuate a relative movement between the respective support group (30) and the respective cam profiles (40) so as to control the respective operative device (25) between the respective rest configuration and the respective active configuration due to interaction of the respective cam follower system (41) with the respective cam profile (40).

5. Package forming apparatus according to claim 4, wherein each cam mechanism (38) comprises two cam profiles (40) and two cam follower systems (41), each one coupled to one respective cam profile (40);
wherein one of the cam follower systems (41) is coupled to the first operative group (26) and the other cam follower system (41) is coupled to the respective second operative group (27);
wherein each actuator (39) is configured to actuate a relative movement between each cam profile (40) and the respective support group (30) so as to actuate a linear movement of the respective first operative group (26) and of the respective second operative group (27) towards or away from one another due to the interaction of each cam follower system (41) with the respective cam profile (40).

6. Package forming apparatus according to any one of claims 1 to 3, wherein the actuation unit (37', 37'') comprises at least one first actuator (39, 85) coupled to one respective first operative group (26) and at least one second actuator (86) coupled to one respective second operative group (27);
wherein the first actuator (39, 85) and the second actuator (86) are configured to linearly move, respectively, the respective first operative group (26) and the respective second operative group (27) along the linear guide system (31) so as to selectively control the operative device (25) between the respective rest configuration and the respective active configuration.

7. Package forming apparatus according to claim 6, wherein the actuation unit (37') comprises at least one first lever mechanism (87) coupling the first operative group (26) and the first actuator (39) with one another and at least one second lever mechanism (88) coupling the second operative group (27) and the second actuator (86) with one another;
wherein the actuation unit (37') comprises for each operative device (25) one respective coupling bar (46) coupling the respective first actuator (36) with the respective first lever mechanism (87);
wherein the first lever mechanism (87) comprises a carrier structure (42') connected to the respective coupling bar (46);
wherein each first lever mechanism (87) comprises a first lever bar (89) angularly movably connected to the respective carrier structure (42') and a transmission group (90) angularly movably connected to the first lever bar (89) and being connected to the respective first operative group (26);
wherein the second lever mechanism (88) comprises a first arm (93) connected to the second actuator (86), a second arm (94) connected to the respective second operative group (27) and a transmission bar (95) connected to the first arm (93) and the second arm (94).

8. Package forming apparatus according to claim 6, wherein the actuation unit (37'') comprises at least one first coupling mechanism (100) coupling the first operative group (26) and the first actuator (85) with one another and at least one second coupling mechanism (101) coupling the second operative group (27) and the second actuator (86) with one another;
wherein each one of the first coupling mechanism (100) and the second coupling mechanism (101) comprises a respective control bar (105) connected to, respectively, the first actuator (85) and the second actuator (86) and a respective coupling group (106) connected to, respectively, the first operative group (26) and the second operative group (27);
wherein the first actuator (85) and the second actuator (86) are configured to actuate a movement of the respective coupling bar (105) along an auxiliary direction having a component parallel to a direction (D1) of linear movement of the respective first operative group (26) and/or of the respective second operative group (27) along the respective linear guide system (31) and such that interaction of the coupling bar (105) with the coupling group (106) leads to a linear movement of the respective coupling group (106) along the direction of linear movement (D1).

9. Package forming apparatus according to any one of the preceding claims, wherein, in use, the tube (4) extends along a central axis (A);
wherein each linear guide system (31) is configured to guide a movement of the respective first operative group (26) and/or of the respective second operative group (27) along a direction (D1) substantially perpendicular to the central axis (A).

10. Package forming apparatus according to any one of the preceding claims, wherein each linear guide system (31) comprises at least one guiding bar (32) and the respective first operative group (26) and the respective second operative group (27) are movably coupled to the respective at least one guiding bar (32).

11. Package forming apparatus according to any one of the preceding claims, wherein each operative device (25) comprises a pair of movable interaction tabs (63), the pair of interaction tabs (63) being configured to interact, in use, with the tube (4) from opposite sides thereof and being configured to move with respect to one another;
wherein one of the respective first operative group (26) and the respective second operative group (27) comprises the respective pair of interaction tabs (63);
wherein each operative device (25) also comprises an actuation device (64) operatively coupled to the pair of interaction tabs (63) and being configured to modify the relative position of the interaction tabs (63) of the pair (26) of interaction tabs (63);
wherein each actuation device (64) comprises:
- an interaction surface profile (65) extending along a first direction (D3) parallel to a direction (D1) of linear movement of the respective first operative group (26) and/or of the respective second operative group (27) along the respective linear guide system (31);
- a cam follower (66) coupled to the respective pair of interaction tabs (63) and engaging the interaction surface profile (65) and being movable along the respective interaction surface profile (65); and
- an actuating system (67) configured to linearly move the interaction surface profile (65) along a second direction (D4) transversal to the first direction (D3);
wherein the cam follower (66) is coupled to the respective interaction surface profile (65) such that movement of the respective interaction surface profile (65) along the second direction (D4) also results in movement of the respective cam follower (64) along the second direction (D4);
wherein the cam follower (66) is coupled to the respective pair of interaction tabs (63) such that movement of the respective cam follower (66) along the second direction (D4) leads to a modification of the relative position of the respective pair of interaction tabs (63).

12. Package forming apparatus according to claim 12, wherein each actuating system (67) comprises a cam element (68) having a groove and each cam follower (66) is arranged within the respective groove, wherein the groove comprises the interaction surface profile (65).

13. Package forming apparatus according to any one of the preceding claims, wherein each first operative group (26) comprises a first half-shell (51) and the respective second operative group (27) comprises a second half-shell (52);
wherein the package forming apparatus (10, 10', 10") also comprises a control device (53) configured to control each first half-shell (51) and the respective second half-shell (52) between a respective first limit position and a respective second limit position;
wherein the control device (53) comprises:
- one or more engagement surface profiles (54), each one extending along a first direction (D3) parallel to a direction (D1) of linear movement of the respective first operative group (26) and/or of the respective second operative group (27) along the respective linear guide system (31);
- one or more cam following elements (55), each one coupled to one of the respective first half-shell (51) and the respective second half-shell (52) and each engaging at least one respective engagement surface profile (54) and being movable along the respective engagement surface profile (54); and
- an actuator member (56) configured to linearly move the one or more engagement surface profiles (54) along a second direction (D4) transversal to the first direction (D3);
wherein each cam following element (55) is coupled to the respective engagement surface profile (54) such that movement of the respective engagement surface profile (54) along the second direction (D4) also leads to movement of the respective cam following element (55) along the second direction (D4);
wherein each cam following element (55) is coupled to the respective first half-shell (51) or the respective second half-shell (52) such that movement of the respective cam following element (55) along the second direction (D4) leads to movement of the respective first half-shell (51) or the respective second half-shell (52) between the respective first limit position and the respective second limit position.

14. Package forming apparatus according to claim 13, wherein each control device (53) comprises a cam member (57) having a groove and each cam following element (55) is arranged within the respective groove, wherein the groove comprises the engagement surface profile (54).

15. Packaging machine (1) for forming packages (2) of a pourable product from an advancing tube (4) formed and longitudinally sealed from a web of packaging material (4);
the packaging machine (1) comprises:
- a conveying device (11) configured to advance the web of packaging material (3) along a web advancement path (P) and for advancing the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10, 10', 10") according to any one of the preceding claims.
